# EUROPEAN PATENT APPLICATION

(11) **EP 1 874 045 A1**
(43) Date of publication of application: **02.01.2008**
(21) Application number: 07012284.1
(22) Date of filing: 22.06.2007
(51) Int. Cl.: H04N 5/44, H04N 5/445, H04N 9/64, H04N 7/16

(54) **Image display apparatus**

(30) Priority: 26.06.2006 JP 2006175310
(71) Applicant: Funai Electric Co., Ltd., Daito-shi, Osaka 574-0013 (JP)
(72) Inventor: Higashi, Norihiro, Osaka (JP)
(74) Representative: Grünecker, Kinkeldey, Stockmair & Schwanhäusser Anwaltssozietät

(57) **Abstract**

According to the present invention, with an HDMI terminal 10a and a composite terminal 10b, a digital decoder 10c outputs an image signal inputted through the HDMI terminal 10a to the subsequent stage through a scaler 10e, an analog decoder 10d, under control by a microcomputer 10i, extracts Closed Caption from a composite signal and outputs it to the microcomputer 10i, and an OSD superimposing section 10f, under control by the microcomputer 10i, on-screen-displays the Closed Caption on the image signal.

## Description

### Technical Field to which the Invention Belongs

The present invention relates to an image display apparatus.

### Related Background Art

In an image signal displayed on a television, there is provided an interval between the end of a screen drawn and the start of the next screen, which is called a vertical blanking interval (VBI) or a vertical blanking period (VBP). VBP includes a signal (vertical synchronization signal) for providing timing for screen drawing, and also includes a redundant part which is utilized to perform teletext broadcasting such as Closed Caption (CC) and data multiplex broadcasting.

In recent years, HDMI (High-Definition Multimedia Interface: a trademark of Licensing, LLC) has become one of the industry standards as a digital audio/video interface for TVs, and the number of televisions with an HDMI terminal has been increasing. HDMI is based on TMDS (Transition-Minimized Differential Signaling) which is a digital image transmission technology, and enables the viewing of clear images. HDMI enables the transmission and reception of all the image, audio, and control signals through a 19-pin connector cable, and supports YUV as well as RGB. DVI is also a TMDS-based standard for PCs, but different from HDMI in concept. DVI supports the transmission and reception of only RGB image signals.

Japanese PatentApplicationLaid-OpenNo. 2005-109703 discloses a technique in which when an interface connected to a display apparatus is changed, a display condition such as an aspect ratio is acquired from the display apparatus and set in an image output apparatus. Japanese Patent Application Laid-Open No. 2003-348529 discloses a technique for recording the sub-picture of CC so as to be able to view television broadcasting including CC in Japan and record at high speed. Japanese Patent Application Laid-Open No. 2004-64547 discloses a technique as an invention using CC for converting electronic program information such as EPG to CC format and superimposing it on an image signal for display. Japanese Patent Application Laid-Open No. 2006-42260 discloses a technique for suppressing frequency interference by keeping a distance between a circuit board for HDMI-compliant digital signals and a circuit board for analog signals.

There is no VBP in an image signal transmitted according to the HDMI standard. For this reason, in data communications according to the HDMI standard, it is impossible to encode and store character information such as CC, teletext broadcasting, and V-chip (violence chip) rating information (hereinafter referred to as VBP information) included in VBP. Therefore, it has been impossible to use VBP information such as CC at the time of viewing clear images of the HDMI standard (TMDS, or DVI), and possible to use VBP information only at the time of using composite (analog) signals whose images are not clear.

That is, at the time of displaying images using HDMI, there are problems as follows:
* A hearing-impaired person who needs CC cannot view clear images.
* A viewing restriction means such as a V-chip which performs viewing restriction using VBP information cannot be used.
* A voice-and-character restriction means such as TV Guardian which restricts voice information and CC using CC cannot be used.

There are subtitles and the like including a DVD as character information displayed on a screen concurrently with images. It can be considered that a hearing-impaired person uses such character information instead of CC. However, such information is essentially different from CC. While CC one-to-one corresponds to a voice approximately in real time, subtitles do not necessarily coincide with the contents and timing of a voice.

### Disclosure of the Invention

The present invention provides an image display apparatus capable of using VBP information (e.g., CC, teletext broadcasting, and V-chip rating information) while a user is viewing clear images according to the HDMI standard.

The present invention provides an image display apparatus which is provided with a first input terminal to which an image signal of a first standard without a vertical blanking period is inputted and a second input terminal to which an image signal of a second standard with a vertical blanking period is inputted and displays an image on a screen based on an image signal, the image display apparatus including an image signal receiving sectionwhich receives an image signal inputted through the first input terminal and outputs it to the subsequent stage, a character information extracting section which receives an image signal inputted through the second input terminal and extracts character information in a vertical blanking period, and a character information superimposing section which superimposes the character information on an image signal outputted from the image signal receiving section.
That is, the image signal receiving section receives an image signal inputted through the first input terminal and outputs it to the subsequent stage, the character information extracting section receives an image signal inputted through the second input terminal and extracts character information in a vertical blanking period, and the character information superimposing section superimposes the character information on an image signal outputted from the image signal receiving section. Thereby, it is possible to view (use) display based on character information which exists only in the second standard while viewing an image based on an image signal of the first standard. The invention can enhance user convenience compared with the case of performing image display based only on one of an image signal inputted through the first input terminal and an image signal inputted through the second input terminal.

### Brief Description of the Drawings

FIG. 1 is a schematic block diagram of a TV receiver.
FIG. 2 is a flowchart showing the process of closed-caption display control performed by a microcomputer.
FIG. 3 is a schematic block diagram of a second modification of a TV receiver.

### Description of Special Embodiments

Embodiments of the present invention will be described in the following order.
(1) The structure of a TV receiver
(2) The process of closed-caption display control performed by a microcomputer
(3) A TV receiver with a V-chip (a first modification)
(4) A TV receiver with TV Guardian (a second modification)
(5) Summary

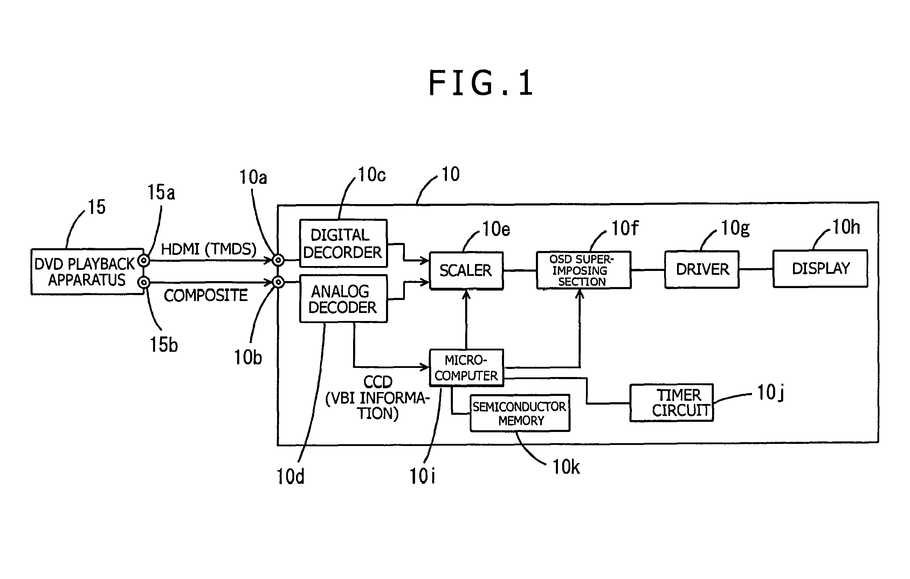

(1) The structure of a TV receiver
Referring to FIGS. 1 to 3, description will be made of an image display apparatus, an image display control method, and an image display control program according to the present invention, by way of an embodiment of a TV receiver.
FIG. 1 is a block diagram of a TV receiver.

A TV receiver 10 is provided with at least two types of image signal input terminals (an HDMI terminal 10a and a composite terminal 10b in the example of FIG. 1) . The TV receiver 10 can receive an image signal at one of the two image signal input terminals or receive image signals at both the two image signal input terminals at a time. The TV receiver 10 displays an image corresponding to the inputted image signal on a display 10h. At least one of the image signal input terminals of the TV receiver 10 is a terminal that complies with a second standard. The second standard refers to a standard that defines image signal transmission with a vertical blanking period (VBP) and is a standard for e.g. an image signal inputted through the composite terminal 10b. Based on VBP information included in VBP, the TV receiver 10 can control not only an image signal including VBP but also other image signals (e.g., an image signal inputted through the HDMI (first standard) terminal 10a).

A DVD playback apparatus 15 (a data playback apparatus) can be connected to the TV receiver 10 through the HDMI terminal 10a and the composite terminal 10b. The DVD playback apparatus 15 is provided with image signal output terminals (an HDMI terminal 15a and a composite terminal 15b in FIG. 1) corresponding to the image signal input terminals of the TV receiver 10, and can output image signals based on the same image data through a plurality of terminals at the same time.

More specifically, the TV receiver 10 includes a digital decoder 10c to which an image signal from the HDMI terminal 10a is inputted, an analog decoder 10d (a decoder for decoding an analog image signal such as an NTSC decoder) to which an image signal from the composite terminal 10b is inputted, a scaler 10e for converting an image signal so as to match the number of pixels on the screen of the display 10h, an OSD superimposing section 10f for superimposing an OSD (On Screen Display) signal on the image signal based on control from a microcomputer 10i, a driver 10g for driving each pixel of the display 10h to display an image based on the image signal, a semiconductor memory 10k for storing data (applications and setting values) necessary when the microcomputer 10i controls the TV receiver 10, and a timer circuit 10j for supplying a clock signal to the microcomputer 10i.

Next, the operation of elements in FIG. 1 and the relationship between the elements will be described in detail.
A data playback apparatus (e.g., the DVD playback apparatus 15) reads and reproduces an image signal from a recording medium (e.g., a DVD, a video CD, a hard disk, etc.), and outputs the reproduced image signal throughoneoforbothoftheHDMI terminal 15a and the composite terminal 15b (or an analog output terminal such as an S terminal or a component terminal). In this embodiment, data from the HDMI terminal 15a and data from the composite terminal 15b (or an analog output terminal such as an S terminal or a component terminal) are outputted with the same timing (synchronized together).

The digital decoder 10c receives an HDMI-compliant digital image signal through the HDMI terminal 10a and outputs it to the scaler 10e. In this embodiment, the digital decoder 10c functions as a receiver that receives digital data from the preceding stage and outputs it to the subsequent stage. If necessary, the digital decoder 10c may convert data into a format processable by the scaler 10e. That is, the digital decoder 10c constitutes an image signal receiving section which receives an image signal inputted through a first input terminal and outputs it to the subsequent stage.

The analog decoder 10d receives a composite image signal through the composite terminal 15b (or an analog output terminal such as an S terminal or a component terminal), demodulates the inputted image signal into three primary color signals (i.e., RGB signals), converts them into a digital signal, and outputs the digital signal to the scaler 10e. Further, upon receiving a predetermined control signal from the microcomputer 10i, the analog decoder 10d extracts VBP information from the vertical blanking period (VBP) of the image signal and outputs it to the microcomputer 10i. For example, in anNTSC image signal, the VBP corresponds to a region from the 1st to 21st scan line in 525 scan lines, and character information is described in this region. In particular, the 21st scan line is a region where closed-caption (CC) character information is described. That is, the analog decoder 10d constitutes a character information extracting section which receives an image signal inputted through a second input terminal and extracts character information in a vertical blanking period.

In this embodiment, the HDMI terminal 10a connected to the HDMI terminal 15a through an HDMI cable constitutes the first input terminal, and the composite terminal 10b (or an analog output terminal such as an S terminal or a component terminal) connected to the composite terminal 15b through a cable constitutes the second input terminal.

An image signal outputted from one of the digital decoder 10c and the analog decoder 10d is supplied to the scaler 10e. In this case, the microcomputer 10i may control the digital decoder 10c and the analog decoder 10d individually so that only one of the decoders outputs an image signal to the scaler 10e, or a switch circuit may be provided before the scaler 10e so that the microcomputer 10i switches the switch circuit.

The scaler 10e receives an image signal from one of the digital decoder 10c and the analog decoder 10d. Based on the image signal represented by an RGB signal, the scaler 10e performs scaling for the number of pixels of the display 10h (mxn pixels, where m is the number of horizontal pixels and n is the number of vertical pixels) and generates image data for one screen on the display 10h. If image data is not generated with a predetermined timing, no image is displayed on a predetermined area of a screen or a specific screen.

The OSD superimposing section 10f generates OSD signals for various displays, based on a control signal (instruction) of the microcomputer 10i. Further, the OSD superimposing section 10f superimposes an OSD signal on the image signal received from the scaler 10e and supplies the resulting signal to the driver 10g. For the on-screen display of CC for example, the microcomputer 10i sends CC character information or the OSD signal itself as well as the control signal to the scaler 10e.

Based on the image signal outputted from the scaler 10e, the driver 10g drives each pixel of the display 10h to display an image on the screen of the display 10h.

The timer circuit 10j is connected to the microcomputer 10i. The timer circuit 10j supplies to the microcomputer 10i a clock signal to provide synchronization for predetermined processing (image signal processing such as superimposing an OSD signal or stopping the output of an image signal) performed on an image signal with a predetermined timing by the scaler 10e and the OSD superimposing section 10f controlled by the microcomputer 10i. Based on setting values stored in the semiconductor memory 10k of the image signal, the microcomputer 10i reads an application as necessary, controls the entire TV receiver 10, and updates setting values. Further, the microcomputer 10i can control the OSD superimposing section 10f and the scaler 10e so that character information outputted from the analog decoder 10d is synchronized with an image signal outputted from the digital decoder 10c.

In the above-described embodiment, the image display apparatus (TV receiver 10) and the data playback apparatus (DVD playback apparatus 15) are separate units. However, it is needless to say that the idea of the invention can also be implemented with the following structures.
* If the data playback apparatus has functions corresponding to the digital decoder 10c, the analog decoder 10d, the microcomputer 10i, the scaler 10e, and the OSD superimposing section 10f, the driver 10g and the display 10h are not necessarily required and the dataplayback apparatus implements the structure of the image display apparatus.
* As a TV receiver and a DVD playback apparatus can be combined in one unit, the image display apparatus and the data playback apparatus can also be combined in one unit.
* The data playback apparatus is not limited to the DVD playback apparatus and may be an apparatus that reproduces and outputs an image signal from a recording medium such as an HDD, a semiconductor memory, or a magnetic recording tape. Thus, the data playback apparatus may be any apparatus as long as it has both an output that does not include VBP and an output that includes VBP in the specification.
* The image display apparatus is not limited to the TV receiver, and may be a PC provided with a DVI terminal (or a TMDS terminal) and a composite terminal or may be a display that has a DVI terminal (or a TMDS terminal) and a composite terminal and can perform image signal processing.
* The invention is described on the assumption that a panel-type television such as an LCD TV or a plasma TV which controls each pixel is used to process HDMI-compliant digital image signals. However, it is needless to say that the invention is applicable to a CRT-based television in which a vertical defection circuit and a horizontal deflection circuit are used as the driver 10g.

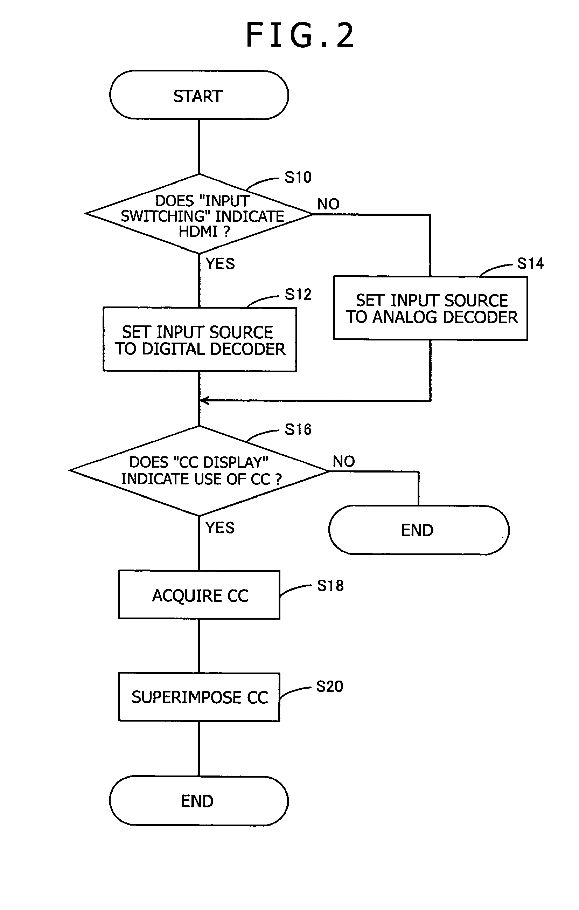

(2) The process of closed-caption display control performed by the microcomputer
Referring next to FIG. 2, description will be made of a process performed by the microcomputer 10i which controls which of the image signals inputted through the HDMI terminal 10a and the composite terminal 10b is outputted to the scaler 10e and controls whether or not to use VBP information inputted through the composite terminal 10b, by way of example of closed-caption data among VBP information. FIG. 2 is a flowchart showing a process performed by the microcomputer 10i. This process maybe repeated while the TV receiver 10 is on, or may be executed when the TV receiver 10 is turned on or a setting value stored in the semiconductor memory 10k is updated.

Setting values can be changed by operating a predetermined remote control or operation panel (not shown). More specifically, there are provided buttons dedicated to "input switching" and "CC display". Upon operation of the "input switching" button, the microcomputer 10i detects the operation and changes the setting value (input setting information) of "input switching" or the setting value (CC display setting information) of "CC display". Then, the microcomputer 10i executes a process described later and switches an image signal source supplying to the scaler 10e between the analog decoder 10d and the digital decoder 10c. As a matter of course, the setting values may be set through a menu screen.

The microcomputer 10i which detects a depression of the "CC display" button and changes the setting value of "CC display" in the semiconductor memory 10k constitutes a character information superimposition selecting section which selects whether or not to superimpose CC (character information) on the image signal when an image based on an image signal from the HDMI terminal 10a (first input terminal) is selected (viewed) .

When the microcomputer 10i starts the process, in step S10 the microcomputer 10i acquires the setting value of "input switching" from the semiconductor memory 10k and determines whether or not the setting is made such that HDMI is an image signal source to the scaler 10e. If HDMI is an image signal source to the scaler 10e, the condition is true and the flow proceeds to step S12, where the microcomputer 10i causes the digital decoder 10c to output an image signal to the scaler 10e and the analog decoder 10d not to output an image signal to the scaler 10e. On the other hand, if HDMI is not an image signal source to the scaler 10e, the condition is false and the flow proceeds to step S14, where the microcomputer 10i causes the digital decoder 10c not to output an image signal to the scaler 10e and the analog decoder 10d to output an image signal to the scaler 10e.

After the microcomputer 10i executes step S12 or step S14, the flow proceeds to step S16, where the microcomputer 10i acquires the setting value of "CC display" from the semiconductor memory 10k and determines based on this setting value whether or not the setting is made such that the analog decoder 10d outputs CC. If the setting is made such that the analog decoder 10d outputs CC, the condition is true and the flow proceeds to step S18. On the other hand, if the setting is not made such that the analog decoder 10d outputs CC, the condition is false and the flow proceeds to the end.

In step S18, the microcomputer 10i outputs to the analog decoder 10d a control signal by which the analog decoder 10d extracts (slices) CC and outputs to the microcomputer 10i, and receives CC data from the analog decoder 10d. In step S20, the microcomputer 10i outputs to the OSD superimposing section 10f a control signal by which the OSD superimposing section 10f performs on-screen display based on the CC data so that the CC is on-screen-displayed on an image signal outputted from the scaler 10e, and the flow proceeds to the end. Although the background of characters of normal CC is nontransparent, the background of characters of on-screen-displayed CC is transparent, so that the loss in a display image due to CC display is reduced. As a matter of course, normal CC display may be performed instead of OSD.

The microcomputer 10i which executes steps S10 and S12 and the digital decoder 10c which, under control by the microcomputer 10i, receives an image signal inputted through the HDMI terminal 10a (first input terminal) and outputs it to the scaler 10e (subsequent stage) constitute an image signal receiving section. The microcomputer 10i which executes steps S16 and S18 and the analog decoder 10d which, under control by the microcomputer 10i, receives an image signal inputted through the composite terminal 10b (second input terminal) and extracts CC (character information) in VBP constitute a character information extracting section. Further, the microcomputer 10i which executes step S20 and the OSD superimposing section 10f which, under control by the microcomputer 10i, superimposes CC (character information) on an image signal outputted through the scaler 10e from the digital decoder 10c constitute a character information superimposing section.

The operation of this embodiment composed of the above structures will be described below.
When a user turns on the TV receiver 10, the microcomputer 10i acquires the setting value of "input switching" in the semiconductor memory 10k, and determines which of the inputs from the HDMI terminal 10a and the composite terminal 10b is set to be outputted to the subsequent stage. If the setting is made such that an input from the HDMI terminal 10a is outputted, the microcomputer 10i performs control so that the digital decoder 10c outputs an image signal to the scaler 10e, and a clear image is displayed on the display 10h based on digital data inputted through the HDMI terminal 10a. On the other hand, if the setting is made such that an input from the composite terminal 10b is outputted, the microcomputer 10i performs control so that the analog decoder 10d outputs an image signal to the scaler 10e, and a slightly unclear image is displayed on the display 10h based on analog data inputted through the composite terminal 10b.

Next, the microcomputer 10i acquires the setting value of "CC display" from the semiconductor memory 10k and determines whether or not the setting is made such that CC is displayed. If the setting is made such that CC is displayed, the microcomputer 10i outputs to the analog decoder 10d a control signal by which the analog decoder 10d extracts CC and outputs to the microcomputer 10i. Then, the microcomputer 10i outputs CC to the OSD superimposing section 10f in accordance with the timing at which an image signal is processed by the OSD superimposing section 10f for the on-screen display of the CC corresponding to the image signal. On the other hand, if the setting is made such that CC is not displayed, only an image signal from the HDMI terminal 10a or an image signal from the composite terminal 10b is displayed on the display 10h.

Thus, when an image signal from the HDMI terminal 10a is displayed on the display 10h, an on-screen-displayed CC is displayed together with a clear image. When an image signal from the composite terminal 10b is displayed on the display 10h, an on-screen-displayed CC is displayed together with a slightly unclear image compared to an image from the HDMI terminal 10a displayed on the display 10h.

(3) A TV receiver with a V-chip (a first modification)
Some image signals with VBP include rating information (or viewing restriction information such as viewing allowable rank information) in VBP. V-chip (violence chip) rating information is one of them. Based on rating information (character information) included in VBP, viewing restriction is performed by outputting (or not outputting) only an image signal of a rating value (hereinafter referred to as "an allowable value") with which viewing is allowed (or not allowed) beforehand by a user.

However, in an image signal without VBP such as an image signal complying with HDMI (the first standard), this viewing restriction cannot be performed, thus impairing user convenience. The first modification proposes the restriction of image viewing (display) using rating information in VBP of a composite (second standard) signal while displaying an image based on an image signal of HDMI (the first standard).

The first modification can be achieved with the same structure as that of the above embodiment; therefore, description will be made based on the structure of FIG. 1. Hereinafter, points different from the above embodiment will be mainly described.

Upon receiving a predetermined control signal from the microcomputer 10i, the analog decoder 10d extracts (slices) rating information (VBP information) from the vertical blanking period (VBP) of an image signal and outputs it to the microcomputer 10i. That is, the analog decoder 10d constitutes a character information extracting section which receives an image signal inputted through the composite terminal (second input terminal) and extracts (slices) rating information (character information) in VBP.

The microcomputer 10i which has received the rating information from the analog decoder 10d compares the rating information with "an allowable value" stored in the semiconductor memory 10k, and determines whether or not viewing is allowed. If viewing is allowed, the microcomputer 10i causes the scaler 10e and the OSD superimposing section 10f to output the image signal as it is (or does not output any control signal). On the other hand, if viewing is not allowed, the microcomputer 10i outputs a control signal to the scaler 10e in accordance with the timing at which the unallowed image signal is processed by the scaler 10e so as to prevent the output of an image signal whose viewing is not allowed.

At this time, if the OSD displays the viewing restriction, a user advantageously does not mistake the suddenly cut image for a failure. Instead of the output of a control signal to the scaler 10e, the OSD superimposing section 10f may perform on-screen display so as to cover the entire screen.

"An allowable value" may be set with a dedicated operation button provided on a remote control or an operation panel (not shown), or rating information may be set with one item in a menu screen.

Thus, the analog decoder 10d which outputs V-chip rating information (character information) under control by the microcomputer 10i corresponds to a character information extracting section. The microcomputer 10i which controls the scaler 10e (or the OSD superimposing section 10f) based on the V-chip rating information (character information) so as to prevent the viewing (outputting) of an image signal of a predetermined rating corresponds to a viewing restriction section.

The operation of the first modification composed of the above structures will be described below.
When the TV receiver 10 is turned on, the analog decoder 10d extracts rating information from an image signal and outputs it to the microcomputer 10i. The microcomputer 10i which has received the rating information acquires "allowable value" data from the semiconductor memory 10k and compares it with the rating value. If the rating value is within the allowable value, the microcomputer 10i causes the scaler 10e and the OSD superimposing section 10f to process the image signal as it is, and the image is displayed on the display 10h. On the other hand, if the rating value is beyond the allowable value, the microcomputer 10i controls the scaler 10e in accordance with the timing at which the image signal including the rating value is processed so that the image signal is not outputted to the driver 10g. Thus, the image signal with the rating information beyond the allowable value is not displayed on the screen.

(4) A TV receiver with TV Guardian (a second modification)
There are known methods and apparatuses for disabling inappropriate voice output by cutting (modifying) a corresponding voice based on CC. TV Guardian is one of them, and utilizes the property that audio output is performed in synchronization with CC display. TV Guardian compares words included in CC with a prepared dictionary (containing inappropriate words, religious words, and dirty words; hereinafter referred to as NG words), thereby identifying an NG word. Then, TV Guardian replaces the NG word with an appropriate word (or delete the NG word), and also mutes a voice outputted concurrently with the display timing of the NG word. This prevents the NG word of CC from being displayed and from being audio-outputted.

However, in an image signal without VBP in the specification such as an image signal complying with HDMI (the first standard), this audio output restriction based on an NG word cannot be performed due to the lack of CC, thus impairing user convenience. The second modification proposes the restriction of audio output using CC in VBP of a composite (second standard) signal while displaying an image based on an image signal of HDMI (the first standard).

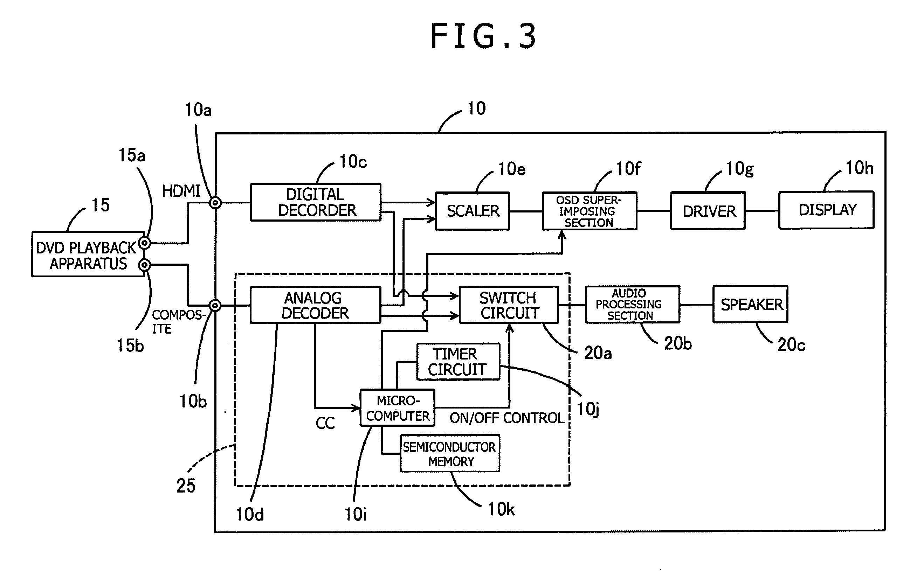

The structure of the second modification will be described with reference to FIG. 3. In the secondmodification, the same elements as those of the above embodiment are denoted by the same reference numerals. Points different from the above embodiment will be mainly described below.

FIG. 3 shows the structure including a switch circuit 20a, an audio processing section 20b, and a speaker 20c, in addition to the structure of FIG. 1.

In FIG. 3, the digital decoder 10c and the analog decoder 10d are connected to the switch circuit 20a as well as to the scaler 10e. One of the digital decoder 10c and the analog decoder 10d is selected by the microcomputer 10i, and only the selected decoder outputs an image signal to the scaler 10e and outputs an audio signal to the switch circuit 20a.

The switch circuit 20a receives an audio signal from the digital decoder 10c or the analog decoder 10d, and determines based on an ON/OFF signal from the microcomputer 10i whether or not to output the audio signal to the subsequent audio processing section 20b. That is, if an ON signal is inputted from the microcomputer 10i, the switch circuit 20a outputs an audio signal to the audio processing section 20b. If an OFF signal is inputted, the switch circuit 20a does not output an audio signal to the audio processing section 20b.

The microcomputer 10i compares a dictionary (NG words) stored in the semiconductor memory 10k with words included in CC outputted from the analog decoder 10d. If the CC does not include NG words, the microcomputer 10i turns on the switch circuit 20a in accordance with the timing at which an audio signal corresponding to NG words is inputted to the switch circuit 20a. If the CC includes an NG word, the microcomputer 10i turns off the switch circuit 20a in accordance with the timing at which an audio signal corresponding to the NG word is inputted to the switch circuit 20a. That is, the NG word is muted based on the CC.

Thus, a function (VBP information extraction function) of the analog decoder 10d as a CC slicer, the switch circuit 20a, the semiconductor memory 10k in which the dictionary of NG words is stored, the timer circuit 10j, and the microcomputer 10i which controls these circuits to mute NG words constitute a TV Guardian (audio output restriction section) which mutes an audio signal (restricts the output) based on CC (character information).

The TV Guardian function is not necessarily provided in the TV receiver 10 (image display apparatus). The TV Guardian function may be provided in the DVD playback apparatus (data playback apparatus) which may restrict audio output before outputting an HDMI (firststandard) signal or a composite (second standard) signal. That is, the DVD playback apparatus (data playback apparatus) which supplies image signals to the HDMI terminal 10a (first input terminal) and the composite terminal 10b (second input terminal) may be provided with the TV Guardian (audio output restriction section) which restricts the output of an audio signal based on CC (character information).

The operation of the second modification composed of the above structures will be described below.
When the TV receiver is turned on, the analog decoder 10d extracts CC from an image signal and outputs it to the microcomputer 10i. The microcomputer 10i which has received the CC compares the dictionary of NG words stored in the semiconductor memory 10k with a word included in the CC and determines whether or not the word coincides with one of the NG words. If the word included in the CC coincides with one of the NG words, the microcomputer 10i outputs a control signal by which the switch circuit 20a is turned off in synchronization with the timing at which an audio signal corresponding to the CC passes the switch circuit 20a, replaces the inappropriate word in the CC with an appropriate word (or delete the inappropriate word), and causes the OSD superimposing section 10f to perform on-screen display based on the CC. This prevents a user from viewing CC with an inappropriate word on the screen and from hearing an inappropriate voice.

On the other hand, if the word included in the CC does not coincide with any of the NG words, the microcomputer 10i outputs a control signal by which the switch circuit 20a is turned on in synchronization with the timing at which an audio signal corresponding to the CC passes the switch circuit 20a, and causes the OSD superimposing section 10f to perform on-screen display based on the CC. This also prevents a user from viewing CC with an inappropriate word on the screen and from being offended by hearing an inappropriate voice from the speaker 20c.

(5) Summary
According to the invention, with the HDMI terminal 10a and the composite terminal 10b, the digital decoder 10c outputs an image signal inputted through the HDMI terminal 10a to the subsequent stage through the scaler 10e, the analog decoder 10d, under control by the microcomputer 10i, extracts Closed Caption from a composite signal and outputs it to the microcomputer 10i, and the OSD superimposing section 10f, under control by the microcomputer 10i, on-screen-displays the Closed Caption on the image signal.

According to a structural example of this embodiment, a TV receiver which is provided with an HDMI terminal to which an HDMI-compliant image signal is inputted and a composite terminal to which a composite image signal is inputted and displays an image on a screen based on the inputted image signal, includes a digital decoder which outputs an image signal inputted through the HDMI terminal to the subsequent stage; an analog decoder which demodulates an image signal inputted through the composite terminal into three primary color (RGB) signals, converts them into a digital signal, outputs the digital signal to the subsequent stage, and extracts and outputs Closed Caption in a vertical blanking period; a scaler which receives an image signal from one of the digital decoder and the analog decoder and performs scaling so as to match the image signal with the number of pixels on the screen; an OSD superimposing section which superimposes specified character information on the image signal outputted from the scaler by on-screen display; a driver which drives the display based on the image signal outputted from the OSD superimposing section; a microcomputer which receives Closed Caption outputted from the analog decoder and causes the OSD superimposing section to display the Closed Caption by on-screen display in accordance with the timing at which an image signal corresponding to the CC is processed; and a semiconductor memory which stores input setting information specifying which of the image signals from the HDMI terminal and the composite terminal is displayed and CC display setting information specifying whether or not to display the Closed Caption. The TV receiver receives image signals synchronized with each other through the HDMI terminal and the composite terminal from a DVD playback apparatus. The microcomputer acquires input setting information from the semiconductor memory and causes one of the digital decoder and the analog decoder to output an image signal based on the input setting information. The microcomputer acquires CC display setting information from the semiconductor memory. If the CC display setting is made so as to output Closed Caption, the microcomputer causes the analog decoder to output the Closed Caption and causes the OSD superimposing section to perform on-screen display based on the Closed Caption.

The image signal complying with the first standard refers to an image signal that is not provided with a vertical blanking interval, i.e., a vertical blanking period and not provided with a specification specifying that data (e.g., Closed Caption, V-chip rating information, Intertext, ADAMS (TV-Asahi Data Multimedia Service), BitCast, and contents in HTML format) describable in a vertical blanking period is stored in another format (e.g., a specification by which digital data is encoded in a header or footer). More specifically, the first standard can include HDMI (High-Definition Multimedia Interface), DVI (Digital Visual Interface), and TMDS (Transition-Minimized Differential Signaling) which is a higher standard, but is not limited to these standards.
The image signal complying with the second standard refers to an image signal with a vertical blanking interval (VBI), i.e., a vertical blanking period (VBP). That is, the second standard refers to a standard specifying the existence of a period, not used for transmission of an image signal, between the end of a screen drawn and the start of the next screen. More specifically, the second standard is a standard for analog television broadcasting and analog image signal transmission such as a composite terminal, an S terminal, and a component terminal.
It is sufficient if the above-mentioned character information can be reconstructed (interpreted) based on a predetermined character code specification, but the reconstructed (interpreted) information does not need to be human-readable. Even if information reconstructed based on the predetermined character code specification is, for example, a sequence of 0s (OFF) and 1s (ON), it is sufficient if the character information superimposing section can interpret the content of the sequence, based on the predetermined character code specification.

The character information superimposing section may superimpose character information by on-screen display (OSD). There is a method (e.g., the conventional displaymethod of Closed Caption) for displaying the color of a predetermined surrounding area as a specific color (e.g., white) with respect to the color (e.g., black) of displayed characters when the character information is superimposed on an image signal. However, this method disables an original image from being viewed in the predetermined surrounding area as well as the character part. In the case of OSD, the background of characters is transparent, thus minimizing a loss in an original image and the obstruction of user's image viewing. Therefore, the display of character information prevents the reduction in user convenience while a loss in an image is minimized, thereby enhancing user convenience.

The structure may include a character information superimposition selecting section which selects whether or not to superimpose the character information during image viewing based on an image signal through the first input terminal. In this structure, for example, a predetermined operation input means receives a user's operation input, and the character information superimposition selecting section selects whether or not to extract character information (or display character information on the screen) by controlling one of or both of the character information extracting section and the character information superimposing section. That is, the display/non-display of character information is made selectable for users who do not need the display of character information, thereby enhancing user convenience.

According to another structural example of this embodiment, an image display apparatus which is provided with the first input terminal to which an image signal of the first standard without a vertical blanking period is inputted and the second input terminal to which an image signal of the second standard with a vertical blanking period is inputted and displays an image on a screen based on an image signal may include an image signal receiving section which receives an image signal inputted through the first input terminal and outputs it to the subsequent stage, a character information extracting section which receives an image signal inputted through the second input terminal and extracts character information in a vertical blankingperiod, and a viewing restriction section which performs viewing restriction based on the character information.
That is, the image signal receiving section receives an image signal inputted through the first input terminal and outputs it to the subsequent stage, the character information extracting section receives an image signal inputted through the second input terminal and extracts character information in a vertical blanking period, and the viewing restriction section performs viewing restriction based on the character information. With this structure, it is possible to perform viewing restriction based on character information which exists only in the second standard while viewing an image based on an image signal of the first standard, thereby enhancing user convenience compared with the case of performing image display based only on an image signal from the first input terminal. This viewing restriction refers to processing such as not displaying on the screen an image signal portion (e.g., one frame) having specific character information (e.g., information indicating an image with violence). The first standard and the second standard are the same as those of the above-described structural example; however, the character information differs from the foregoing character information. It does not need to be reconstructed and may be any other information as long as the viewing restriction section can interpret it.

As a specific structural example, the viewing restriction section may be a V-chip, and the character information may be V-chip rating information. The adoption of a widespread specification such as the V-chip (widespread in North America such as the United States) enables more users to use it, thereby further enhancing user convenience.

Further, according to another structural example of this embodiment, an image display apparatus which is provided with the first input terminal to which an image audio signal of the first standard without a vertical blanking period is inputted and the second input terminal to which an image audio signal of the second standard with a vertical blanking period is inputted and performs audio output based on an audio signal while displaying an image on a screen based on an image signal may include an image audio signal receiving section which receives an image audio signal inputted through the first input terminal and outputs it to the subsequent stage, a character information extracting section which receives an image audio signal inputted through the second input terminal and extracts character information in a vertical blanking period, and an audio output restriction section which restricts audio output based on the character information.
That is, the image audio signal receiving section receives an image audio signal inputted through the first input terminal and outputs it to the subsequent stage, the character information extracting section receives an image audio signal inputted through the second input terminal and extracts character information in a vertical blanking period, and the audio output restriction section restricts audio output based on the character information. With this structure, it is possible to restrict audio output based on character information which exists only in the second standard while viewing an image based on an image audio signal of the first standard, thereby enhancing user convenience compared with the case of performing image display and audio output based only on an image audio signal from the first input terminal. The restriction of audio signal output signifies restricting the audio output (or cutting the audio signal) corresponding to character information including a preset inappropriate word (NG word) . The first standard, the second standard, and the character information are the same as those of the above-described structural example.

As a specific structural example, the audio output restriction section may be a TV Guardian. The adoption of a widespread specification such as the TV Guardian (widespread in North America such as the United States) enables more users to use it, thereby further enhancing user convenience.

Further, as a specific structural example, the character information may be closed-caption data. The adoption of a widespread specification such as Closed Caption (widespread in North America such as the United States) enables more users to use it, thereby further enhancing user convenience.

Further, an image signal inputted through the first input terminal may be synchronized with an image signal inputted through the second input terminal. If the respective image signals (or image audio signals) inputted through the first input terminal and the second input terminal are synchronized with each other, it is easy to adjust the timing for the process of superimposing character information (or performing viewing restriction or audio output restriction based on the character information) at the time of superimposing the character information on the image signal (or image audio signal) inputted through the first input terminal based on the character information included in the image signal (or image audio signal) inputted through the second input terminal (or performing viewing restriction or audio output restriction based on the character information), thus facilitating the design of the apparatus.

Further, as a more specific structural example of the first standard, the first standard may be the HDMI standard. The adoption of a widespread and trend specification such as HDMI (one of the industry standards) enables more users to use it, thereby further enhancing user convenience.

Further, as a more specific structural example of the second standard, the second standard may be the standard of a composite image signal. The adoption of a widespread specification such as the standard of a composite terminal (already mounted on almost all image display apparatuses) enables more users to use it, thereby further enhancing user convenience.

As described above, the present invention can provide an image display apparatus and a TV receiver which enhance user convenience much more than before.
It is needless to say that the invention is not limited to the above-described examples and an example of the invention includes:
* modification of a combination of mutually replaceable members and structures disclosed in the above-described examples,
* modification of a combination or substitution of members and structures not disclosed in the above-described examples but of well-known techniques that are mutually replaceable with members and structures disclosed in the above-described examples, and
* modification of a combination or substitution of members and structures that are not disclosed in the above-described examples but can be thought of by those skilled in the art based on well-known techniques in place of members and structures disclosed in the above-described examples.

## Claims

1. An image display apparatus that is provided with a first input terminal to which an image signal without a vertical blanking period is inputted and a second input terminal to which an image signal with the vertical blanking period is inputted and displays an image on a screen based on the image signal, the image display apparatus comprising:
an image signal receiving section that receives the image signal inputted through the first input terminal and outputs the image signal to a subsequent stage;
a character information extracting section that receives the image signal inputted through the second input terminal and extracts character information in the vertical blanking period; and
a character information superimposing section that superimposes the character information on the image signal outputted from the image signal receiving section.

2. The image display apparatus according to claim 1, wherein the character information superimposing section superimposes the character information by on-screen display.

3. The image display apparatus according to any of claims 1 or 2, further comprising a character information superimposition selecting section that selects whether or not to superimpose the character information during image viewing based on the image signal inputted through the first input terminal

4. An image display apparatus that is provided with a first input terminal to which an image signal without a vertical blanking period is inputted and a second input terminal to which an image signal with the vertical blanking period is inputted and displays an image on a screen based on the image signal, the image display apparatus comprising:
an image signal receiving section that receives the image signal inputted through the first input terminal and outputs the image signal to a subsequent stage;
a character information extracting section that receives the image signal inputted through the second input terminal and extracts character information in the vertical blanking period; and
a viewing restriction section that performs viewing restriction based on the character information.

5. The image display apparatus according to claim 4, wherein the viewing restriction section is a V-chip and the character information is V-chip rating information.

6. An image display apparatus that is provided with a first input terminal to which an image audio signal without a vertical blanking period is inputted and a second input terminal to which an image audio signal with the vertical blanking period is inputted and performs audio output based on the audio signal while displaying an image on a screen based on the image signal, the image display apparatus comprising:
an image audio signal receiving section that receives the image audio signal inputted through the first input terminal and outputs the image audio signal to a subsequent stage;
a character information extracting section that receives the image audio signal inputted through the second input terminal and extracts character information in the vertical blanking period; and
an audio output restriction section that restricts audio output based on the character information.

7. The image display apparatus according to claim 6, wherein the audio output restriction section is a TV Guardian.

8. The image display apparatus according to any of claims 1, 2, 3, 6, or7, wherein the character information is closed-caption data.

9. The image display apparatus according to any of claims 1 to 8, wherein the image signal inputted through the first input terminal is synchronized with the image signal inputted through the second input terminal.

10. The image display apparatus according to any of claims 1 to 9, wherein the image signal that the first input terminal inputs is an image signal of an HDMI standard.

11. The image display apparatus according to any of claims 1 to 10, wherein the image signal that the second input terminal inputs is a composite image signal.
